# EUROPÄISCHE PATENTSCHRIFT

(11) **EP 2 033 743 B1**
(45) Veröffentlichungstag und Bekanntmachung des Hinweises auf die Patenterteilung: **22.06.2011**
(21) Anmeldenummer: 08015383.6
(22) Anmeldetag: 01.09.2008
(51) Int. Cl.: B25F 5/00, B25D 16/00, F16H 3/097

(54) **Getriebe für ein kraftgetriebenes Werkzeug, insbesondere ein Elektrohandwerkzeuggerät**
Transmission system for a power tool, in particular an electric hand tool
Châssis pour un outil motorisé, en particulier un outil électro-manuel

(30) Priorität: 05.09.2007 DE 102007042045
(43) Veröffentlichungstag der Anmeldung: 11.03.2009
(73) Patentinhaber: Friedrich Duss Maschinenfabrik GmbH & Co. KG, 75387 Neubulach (DE)
(72) Erfinder: Schroth, Gerhard, 75387 Neubulach (DE)
(74) Vertreter: Reinhardt, Harry

(56) Entgegenhaltungen:
- DE-B2- 2 643 177
- GB-A- 2 331 268

## Beschreibung

### Gebiet der Erfindung

Die Erfindung betrifft ein Getriebe für ein kraftgetriebenes Werkzeug, insbesondere ein Elektrohandwerkzeuggerät wie eine Bohrmaschine nach dem Oberbegriff des Anspruches 1 sowie ein entsprechend ausgestattetes Elektrohandwerkzeug nach dem Oberbegriff des Anspruches 9.

### Stand der Technik

Bei kraftgetriebenen Werkzeugen wie insbesondere Bohr- und Meißelhämmern, bei denen ein Werkzeug wie z.B. ein Einsteckwerkzeug drehend und/oder schlagend antreibbar ist, muss meist die hohe Motordrehzahl des Antriebsmotors auf die gewünschte Bohr-/Schlagdrehzahl abtriebseitig reduziert werden. Dies gilt insbesondere bei Bohr- und Meißelhämmern, die in unterschiedlichen Betriebsarten eingesetzt werden, wobei Drehbohren, Schlagbohren und Meißeln unterschieden wird. Diese Betriebsarten werden meist über ein mechanisches Getriebe umgesetzt, wobei je nach Drehzahlverhältnis von Antriebswelle - wie z.B. einer Ankerwelle eines Elektromotors - und Bohrspindel unter Umständen mehrere Übersetzungsstufen erforderlich sind.

Üblicherweise werden diese Übersetzungsstufen dadurch verwirklicht, dass neben dem antreibenden Ankerritzel achsparallel versetzt eine oder mehrere Vorgelegewellen mit entsprechenden Zahnradpaarungen angebracht sind. Dies ist z.B. aus der DE 10 2005 036 731 A1 oder auch aus der EP 1 092 896 A1, EP 1 147 861 A2 bekannt.

Aus der dem Oberbegriff des Anspruches 1 zugrunde liegenden GB 2 331 268 A ist ein Übersetzungsgetriebe für eine Winkelschleifer bekannt, bei dem Antriebswelle und eine in ein Vorsatzgehäuse führende Abtriebswelle koaxial zueinander angeordnet sind. Eine Vorgelegewelle ist parallel zu Antriebs- und Abtriebswelle angeordnet.

Antriebs- und Abtriebswelle sind je für sich im Gehäuse gelagert. Sowohl die Anordnung von Antriebs- und Abtriebswelle hintereinander als auch eine zusätzliche Lagerstelle zwischen den beiden, das ein Ritzel der damit verbundenen Abtriebswelle lagert, erhöhen die Baulänge.

Auch die DE 101 11 748 A1 zeigt ein Schaltwerk, bei dem Vorgelegewelle und Schlagantriebswelle in einem gemeinsamen Axialbereich direkt benachbart parallel zueinander angeordnet sind und eine direkt miteinander kämmende, jeweils über eine Schalthülse einkuppelbare, antreibende Zahnradpaarung drehfrei führen.

Die DE 197 17 466 B4 zeigt, dass die Abtriebswelle des Motors über einen Antriebsritzel mit einem Zahnkranz einer als Mitnehmerhülse ausgebildeten Vorgelegewelle in Eingriff steht, die über ein Planetengetriebe auf eine weitere Welle wirkt..

Durch den bei diesen Geräten erforderlichen achsparallelen Versatz der Vorgelegewellen oder auch der Mitnehmerhülse wird ein zusätzlicher Baurraum benötigt, der insbesondere bei Elektrohandwerkzeuggeräten dem Wunsch entgegenläuft, diese Geräte kompakt und gewichtsorientiert aufzubauen.

Aus der DE 26 43 177 ist ein Schaltgetriebe bekannt, bei dem Antriebs- und Abtriebswelle aneinander liegend angeordnet. Vorgelegewellen sind parallel dazu angeordnet. Allerdings ist genau in dem Bereich, in dem die Wellen aneinander liegen ein zusätzliches Lager zur Lagerung im Gehäuse vorgesehen, was die Baulänge erhöht.

### Aufgabe der Erfindung

Hiervon ausgehend liegt der vorliegenden Erfindung die Aufgabe zugrunde, ein Getriebe für ein kraftgetriebenes Werkzeug sowie ein Elektrohandwerkzeug zu schaffen, das kompakt und gewichtsorientiert aufgebaut ist.

Diese Aufgabe wird durch ein Getriebe mit den Merkmalen des Anspruches 1 sowie ein Elektrohandwerkzeug mit den Merkmalen des Anspruches 9 gelöst.

Antriebswelle und wenigstens eine der Vorgelegewellen sind koaxial zueinander angeordnet. Dies erlaubt in Verbindung mit der quer zur Spindel angeordneten Antriebswelle eine sehr kompakte Bauweise, wobei zusätzlich auf eine Lagerstelle im Gehäuse verzichtet wird, sodass auch eine entsprechende Gewichtseinsparung eintritt. Die Wellen befinden sich unmittelbar hintereinander, wobei sie aufeinander oder über andere Bauteile aneinander gelagert werden können.

Die Lagerung der Vorgelegewelle erfolgt vorzugsweise einseitig auf der Antriebswelle, so dass der achsparallele Versatz dieser Welle zur Ankerwelle nicht erforderlich ist. Dabei ist zu berücksichtigen, dass die Lagerung die unterschiedlichen Drehzahlen von Antriebswelle und Vorgelegewelle im Betrieb aufnehmen muss. Dazu ist das Lager so ausgebildet, dass es zum einen die Axial- und Radialkräfte aufnimmt, zum anderen gleichzeitig die Relativdrehzahl von Antriebswelle und Vorgelegewelle kompensiert.

Die Kombination mit der quer zur Axialrichtung der Spindel angeordneten Antriebswelle in Verbindung mit der daran gelagerten Vorgelegewelle erlaubt einen kompakten Aufbau unter Verzicht auf wenigstens ein Lager im Gehäuse und schafft in einer bevorzugten Ausführungsform die baulichen Voraussetzungen dafür, das gesamte Getriebe weiter in Richtung der Achslinie der Arbeitsspindel zu versetzen. Genau dies erlaubt aber einen deutlich kompakteren Aufbau als im Stand der Technik bisher üblich und möglich.

Weitere Vorteile ergeben sich aus den Unteransprüchen und der nachfolgenden Beschreibung.

### Kurzbeschreibung der Figuren

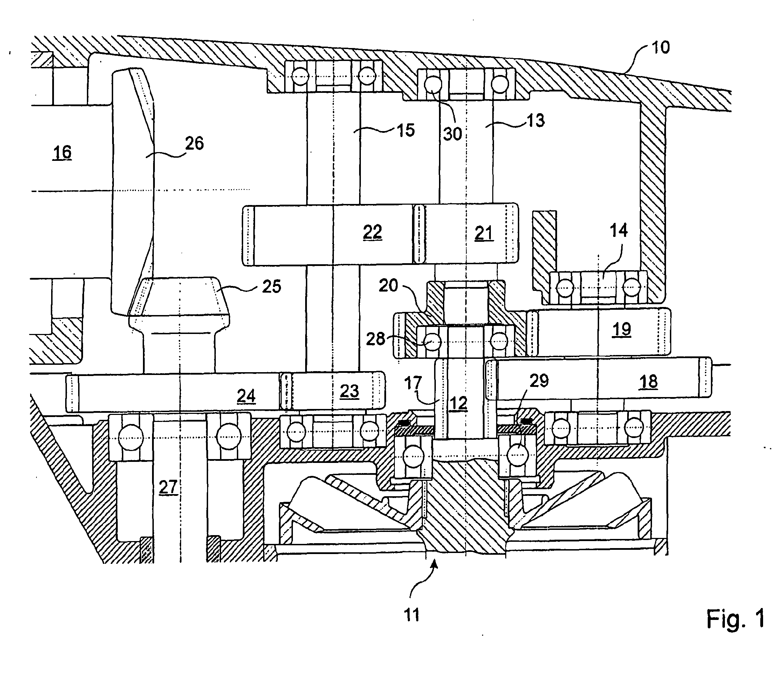

Im Folgenden wird die Erfindung anhand eines in der einzigen Figur 1 dargestellten Ausführungsbeispiels näher erläutert. Figur 1 zeigt einen Blick in das Getriebe eines Elektrowerkzeugs als Schnitt durch das Gehäuse des Werkzeugs.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet.

Fig. 1 zeigt ein Getriebe für ein kraftgetriebenes Werkzeug, insbesondere ein Elektrohandwerkzeuggerät 10, wie es als Bohrmaschine, Bohr- oder Meißelhammer einsetzbar ist. Andere Verwendungen sind denkbar, solange das Getriebe wie im Folgenden erläutert aufgebaut ist.

Im Ausführungsbeispiel wird das Elektrohandwerkzeuggerät 10 von einem Antriebsmotor 11 in Form eines Elektromotors angetrieben. Insofern ist die Antriebswelle 12 die Ankerwelle des Elektromotors. Alternativ kann die Antriebswelle aber auch die Antriebswelle einer pneumatischen oder hydraulischen Antriebseinheit sein.

Das zeichnerisch nicht dargestellte Werkzeug wie z.B. ein Einsteckwerkzeug wird über eine Spindel 16 angetrieben. Zur Übertragung der Antriebsenergie von der Antriebswelle 12 auf die Spindel 16 sind Vorgelegewellen, im Ausführungsbeispiel die Vorgelegewellen 13, 14 und 15 sowie die Lagerwelle 27 vorgesehen. Die Antriebswelle 12 ist koaxial zur Vorgelegewelle 13, wobei es auch möglich ist, mehrere Vorgelegewellen koaxial zur Antriebswelle 12 anzuordnen, sofern durch entsprechende Lager eine Lagerung der Getriebeteile gewährleistet ist. Die koaxiale Anordnung von Antriebswelle und Vorgelegewelle 13 gestattet eine kompaktere Bauweise, da einerseits der Raum, der bisher für Antriebswelle und Vorgelegewelle 13 unabhängig voneinander vorgesehen werden musste, nun zusammengeführt ist. Gleichzeitig kann auf eine Lagerstelle im Gehäuse verzichtet werden, da die Antriebswelle 12 gleichzeitig als Lagerstelle für die Vorgelegewelle 13 dient. Beide Wellen gemeinsam sind damit an vier Lagerstellen vorzugsweise über die in der Figur 1 dargestellten drei Lager 28, 29 und 30 anstelle der bisher üblichen vier Lagerstellen gelagert. Antriebswelle und Vorgelegewelle liegen insofern auf derselben Linie, ohne sich zu übergreifen. Falls ein derartiger Übergriff gewünscht ist, um z.B. die Zahnradpaarungen räumlich kompakter anzuordnen, ist dies jedoch möglich.

Antriebswelle 12 und damit auch die wenigstens eine koaxial zur Antriebswelle angeordnete Vorgelegewelle 13 sind im Ausführungsbeispiel quer zur Axialrichtung der Spindel 16 angeordnet. Andere Anordnungen z.B. auch parallel zur Axialrichtung sind in einer nicht erfindungsgemäßen Ausführungsform denkbar. Antriebswelle 12, Spindel 16 und die Vorgelegewellen 13, 14, 15 sind über Zahnradpaarungen und/oder eine Kegelverzahnung 25, 26 miteinander verbunden. Im Detail überträgt Antriebswelle 12 mit dem Zahnrad 17 ihre Rotation auf Zahnrad 18, das an der Vorgelegewelle 14 gelagert ist. Dort ist ebenfalls das Zahnrad 19 gelagert, das mit dem Zahnrad 20 in Wirkverbindung steht, das vorzugsweise mit der Vorgelegewelle 13 verbunden ist. Auf Vorgelegewelle 13 befindet sich Zahnrad 21, das mit Zahnrad 22 in Wirkverbindung steht, das auf Vorgelegewelle 15 befestigt ist. Auf dieser Vorgelegewelle 15 ist auch das Zahnrad 23 befestigt, das mit dem Zahnrad 24 in Wirkverbindung steht, das seinerseits auf der Lagerwelle 27 gelagert ist. Die Lagerwelle 27 trägt schließlich die Kegelverzahnung 25, die mit der Kegelverzahnung 26 der Spindel 16 in Wirkverbindung steht.

Das Lager 28 lagert die wenigstens eine Vorgelegewelle 13 einseitig an der Antriebswelle 12. Im Ausführungsbeispiel ist das Lager direkt im Zahnrad der Vorgelegewelle eingebracht, welches wiederum fest mit der Vorgelegewelle 13 verbunden ist. Lager 28 ist dafür geeignet, die Axial- und Radialkräfte aufgrund unterschiedlicher Drehzahlen von Ankerwelle und Vorgelegewelle aufzunehmen. Alternativ kann das Lager an der Vorgelegewelle 13 direkt angebracht sein und damit nicht im Zahnrad 20. Ebenso kann das Zahnrad 20 bedarfsweise durch eine doppelte Lagerung weder mit der Vorgelegewelle noch mit der Antriebswelle fest verbunden sein. Wird das Gehäuse entsprechend ausgebildet, können in einer nicht erfindungsgemäßen Ausführungsform auch am Gehäuse die Lagerstellen für die linear hintereinander und koaxial zueinander angeordnete Antriebswelle 12 und Vorgelegewelle 13 vorgesehen sein.

Die Kombination der quer zur Axialrichtung der Spindel angeordneten Antriebswelle 12 in Verbindung mit der daran gelagerten Vorgelegewelle 13 erlaubt einen kompakten Aufbau unter Verzicht auf wenigstens ein Lager im Gehäuse und schafft zugleich die baulichen Voraussetzungen dafür, das gesamte Getriebe in Fig. 1 weiter nach oben in Richtung der Achslinie der Spindel 16 zu versetzen. Dies macht insbesondere die etwa gleiche Höhe von Abtriebswelle (Spindel) und Zwischenlager 28 deutlich. Genau dies erlaubt aber einen deutlich kompakteren Aufbau als im Stand der Technik bisher üblich und möglich.

Zeichnerisch nicht dargestellt ist das gesamte Elektrohandwerkzeug, das mit einem Werkzeug versehen ist, das drehend und/oder schlagend antreibbar ist. Wird dieses Elektrowerkzeug mit einem derartigen Getriebe versehen, bei dem Ankerwelle 12 und Vorgelegewelle 13 koaxial zueinander angeordnet sind, ergibt sich eine kompakte und gewichtssparende Bauweise des gesamten Geräts.

### Bezugszeichenliste

- 10: Elektrohandwerkzeuggerät
- 11: Antriebsmotor
- 12: Antriebswelle
- 13, 14, 15: Vorgelegewelle
- 16: Spindel
- 17...24: Zahnrad
- 25, 26: Kegelzahnrad
- 27: Lagerwelle
- 28,29,30: Lager

## Patentansprüche

1. Getriebe für ein kraftgetriebenes Werkzeug, insbesondere ein Elektrohandwerkzeuggerät (10) wie eine Bohrmaschine, das drehend und/oder schlagend antreibbar ist, mit
- einem Antriebsmotor (11) mit einer Antriebswelle (12),
- einer ein Werkzeug antreibenden Spindel (16), und
- mehreren Vorgelegewellen (13, 14, 15) zur Übertragung der Antriebsenergie von der Antriebswelle (12) auf die Spindel (16),
wobei die quer zur Axialrichtung der Spindel (16) angeordnete Antriebswelle (12) koaxial zu wenigstens einer der Vorgelegewellen (13, 14, 15) angeordnet ist **dadurch gekennzeichnet dass** die wenigstens eine Vorgelegewelle (13) und die Antriebswelle (12) über ein Lager (28) aneinander gelagert sind.

2. Getriebe nach Anspruch 1, **dadurch gekennzeichnet, dass** das Lager (28) die wenigstens eine Vorgelegewelle (13) einseitig an der Antriebswelle (12) lagert.

3. Getriebe nach Anspruch 1 oder 2, **dadurch gekennzeichnet, dass** das Lager (28) in einem Zahnrad (20) der Vorgelegewelle (13) angeordnet ist, das vorzugsweise fest mit der Vorgelegewelle verbunden ist.

4. Getriebe nach einem der vorhergehenden Ansprüche, **dadurch gekennzeichnet, dass** das Lager an der Vorgelegewelle angeordnet ist.

5. Getriebe nach einem der Ansprüche 1, 2 oder 4, **dadurch gekennzeichnet, dass** ein Zahnrad doppelt an Vorgelegewelle und Antriebswelle (12) gelagert ist.

6. Getriebe nach einem der vorhergehenden Ansprüche, **dadurch gekennzeichnet, dass** mehrere Vorgelegewellen koaxial zur Antriebswelle (12) gelagert sind.

7. Getriebe nach einem der vorhergehenden Ansprüche, **dadurch gekennzeichnet, dass** das Getriebe mit dem Lager (28) großenteils etwa auf der Achslinie der Spindel (16) angeordnet ist.

8. Getriebe nach einem der vorhergehenden Ansprüche, **dadurch gekennzeichnet, dass** die Antriebswelle (12) die Ankerwelle eines Elektromotors oder die Antriebswelle einer pneumatischen oder hydraulischen Antriebseinheit ist.

9. Elektrohandwerkzeug mit einem Werkzeug, das drehend und/oder schlagend antreibbar ist, mit einem Getriebe nach einem der vorhergehenden Ansprüche, wobei eine Antriebswelle (12) zur Übertragung der Antriebsenergie eines Antriebsmotors (11) über mehrere Vorgelegewellen (13, 14, 15) mit einer das Werkzeug antreibenden Spindel (16) in Wirkverbindung steht,
**dadurch gekennzeichnet, dass** die quer zur Axialrichtung der Spindel (16) angeordnete Antriebswelle (12) koaxial zu wenigstens einer der Vorgelegewellen (13, 14, 15) angeordnet ist und dass die wenigstens eine Vorgelegewelle (13) und die Antriebswelle (12) über ein Lager (28 aneinander gelagert sind.

## Claims

1. Transmission system for a power tool, in particular an electric hand tool (10) such as a drill which can be driven to rotate and/or impact, having
- a drive motor (11) with a drive shaft (12),
- a spindle (16) driving a tool, and
- a plurality of countershafts (13,14,15) for transmitting the drive energy from the drive shaft (12) to the spindle (16),
wherein the drive shaft (12) arranged transversely to the axial direction of the spindle (16) is disposed coaxially relative to at least one of the countershafts (13,14, 15), **characterised by** the fact that the at least one countershaft (13) and the drive shaft (12) are carried abutting one another by a bearing (28).

2. Transmission system according to Claim 1, **characterised in that** the bearing (28) carries the at least one countershaft (13) at one end abutting the drive shaft (12).

3. Transmission system according to Claim 1 or 2, **characterised in that** the bearing (28) is disposed in a gearwheel (20) of the countershaft (13), said gearwheel being preferably firmly connected to the countershaft.

4. Transmission system according to any of the preceding claims, **characterised in that** the bearing is disposed on the countershaft.

5. Transmission system according to any of Claims 1, 2 or 4, **characterised in that** a gearwheel is doubly carried on countershaft and drive shaft (12).

6. Transmission system according to any of the preceding claims, **characterised in that** a plurality of countershafts are carried coaxially to the drive shaft (12).

7. Transmission system according to any of the preceding claims, **characterised in that** the transmission system with the bearing (28) is largely disposed roughly on the centreline of the spindle (16).

8. Transmission system according to any of the preceding claims, **characterised in that** the drive shaft (12) is the armature shaft of an electric motor or the drive shaft of a pneumatic or hydraulic drive unit.

9. Electric hand tool with a tool that can be driven to rotate and/or impact, having a transmission system according to any of the preceding claims, wherein a drive shaft (12) for transmitting the drive energy of a drive motor (11) is interactively coupled via a plurality of countershafts (13, 14, 15) with a spindle (16) driving the tool, **characterised in that** the drive shaft (12) that is arranged transversely to the axial direction of the spindle (16) is disposed coaxially to at least one of the countershafts (13,14,15) and that the at least one countershaft (13) and the drive shaft (12) are carried abutting one another by a bearing (28).

## Revendications

1. Transmission pour un outil entraîné par un moteur, en particulier un appareil pour outil électro-manuel (10) tel qu'une perceuse, qui peut être entraîné en rotation et/ou en percussion, comportant :
- un moteur d'entraînement (11) ayant un arbre d'entraînement (12),
- une broche entraînant un outil (16) et
- plusieurs arbres de transmission intermédiaire (13,14,15) pour transmettre l'énergie d'entraînement de l'arbre d'entraînement (12) à la broche (16),
- l'arbre d'entraînement (12) disposé perpendiculairement à la direction axiale de la broche (16), étant disposé coaxialement à au moins un des arbres d'entraînement intermédiaires (13,14,15), **caractérisée en ce qu'**au moins l'arbre de transmission intermédiaire (13) et l'arbre d'entraînement (12) sont reliés l'un à l'autre au moyen d'un roulement à billes (28).

2. Transmission selon la revendication 1, **caractérisée en ce que** le roulement à billes (28) supporte au moins l'arbre de transmission intermédiaire (13) d'un seul côté sur l'arbre d'entraînement (12).

3. Transmission selon la revendication 1 ou 2, **caractérisé en ce que** le roulement à billes (28) est disposé dans une roue dentée (20) de l'arbre de transmission intermédiaire (13), qui est de préférence reliée fermement à l'arbre de transmission intermédiaire.

4. Transmission selon l'une des revendications précédentes, **caractérisée en ce que** le roulement à billes est disposé sur l'arbre de transmission intermédiaire.

5. Transmission selon l'une des revendications 1, 2 ou 4, **caractérisée en ce qu'**une roue dentée est montée à la fois sur l'arbre de transmission intermédiaire et sur l'arbre de transmission (12).

6. Transmission selon l'une des revendications précédentes, **caractérisée en ce que** plusieurs arbres de transmission intermédiairse sont montés coaxialement à l'arbre d'entraînement (12).

7. Transmission selon l'une des revendications précédentes, **caractérisée en ce que** la transmission avec le roulement à billes (28) est disposée en grande partie à peu près sur l'axe de la broche (16).

8. Transmission selon l'une des revendications précédentes, **caractérisée en ce que** l'arbre d'entraînement (12) est l'axe d'ancre d'un moteur électrique ou l'arbre d'entraînement d'une unité d'entraînement hydraulique ou pneumatique.

9. Outil électro-manuel comportant un outil qui peut être entraîné en rotation et/ou en percussion, une transmission selon l'une des revendications précédentes, un arbre d'entraînement (12) pour la transmission de l'énergie d'entraînement d'un moteur d'entraînement (11) au moyen de plusieurs arbres de transmission intermédiaires (13,14,15) étant en liaison active avec une broche (16) entraînant l'outil, **caractérisé en ce que** l'arbre d'entraînement (12) disposé perpendiculairement à la direction axiale de la broche (16) est disposé coaxialement à au moins un des arbres de transmission intermédiaire (13,14,15) et **en ce qu'**au moins un arbre de transmission intermédiaire (13) et l'arbre d'entraînement (12) sont reliés l'un à l'autre au moyen d'un roulement à billes (28).
